# EUROPÄISCHE PATENTSCHRIFT

(11) **EP 2 994 662 B1**
(45) Veröffentlichungstag und Bekanntmachung des Hinweises auf die Patenterteilung: **01.04.2020**
(21) Anmeldenummer: 14728417.8
(22) Anmeldetag: 28.04.2014
(51) Int. Cl.: F16D 41/02, F16D 41/07, F16D 41/12, F16D 41/20, E05B 81/48, E05B 81/56

(54) **KLEINSTANTRIEB FÜR AUTOMOBILSCHLÖSSER MIT LAUFRICHTUNGSSPERRE**
MINIATURE DRIVE FOR AUTOMOBILE LOCKS WITH RUNNING DIRECTION LOCK
MICRO-ACTIONNEUR POUR SERRURES D'AUTOMOBILES À VERROUILLAGE DANS LE SENS D'ENTRAÎNEMENT

(30) Priorität: 06.05.2013 DE 102013007658
(43) Veröffentlichungstag der Anmeldung: 16.03.2016
(73) Patentinhaber: Kiekert Aktiengesellschaft, 42579 Heiligenhaus (DE)
(72) Erfinder: REDDMANN, Uwe, 45145 Essen (DE); KOUBEK, Milan, 53002 Pardubice (CZ); JANZ, Manfred, 45357 Essen (DE)
(86) Internationale Anmeldenummer: PCT/DE2014/000218
(87) Internationale Veröffentlichungsnummer: WO 2014/180459

(56) Entgegenhaltungen:
- EP-A1- 1 843 225
- EP-A2- 1 130 198
- DE-A1- 19 747 211
- DE-B1- 1 500 366
- FR-A- 1 442 222
- US-A- 2 737 274
- US-A- 2 812 839
- US-A- 2 998 874
- US-A- 3 946 843
- US-A- 5 597 057
- US-A- 5 678 668

## Beschreibung

Die Erfindung betrifft einen Kleinstantrieb für das Betätigen von Automobilschlössern mit einem dem Schlossgehäuse zugeordneten Getriebe mit Schneckengetrieberad und einem Motor, der über eine ein Zurückdrehen des Getriebes verhindernde Sperre verfügt.

Bei Antrieben zum elektrischen Öffnen von Automobilschlössern, insbesondere bei Kleinstantrieben werden Motoren vor allem aus Kostengründen derartig bestromt, dass sie das Getriebe mit dem Schneckengetrieberad lediglich in eine Richtung antreiben können. Ein Zurückstellen des Getriebes nach Ablauf der Bestromung des Motors ist dabei nicht erwünscht, es würde den weiteren Lauf des Kleinstantriebes behindern. Da die bekannten Getriebe, zumindest bereichsweise, federunterstützend sind, kommt es ohne eine Sperre nach dem Abschalten des Stroms und dem Ausschalten des Antriebes zu einem Zurückstellen der Schneckengetrieberäder des Getriebes. Dies ist wie gesagt nachteilig und unerwünscht. Bei allgemein bekannten Kleinstantrieben wird das Zurückdrehen des Getriebes entgegen der Antriebsrichtung dadurch verhindert, dass am Motor eine Freilaufdiode angebracht ist, über die der Motor beim Zurückdrehen kurzgeschlossen wird und damit abbremst. Dadurch wird verhindert, dass die beim Ausstellen des Motors und durch das Getriebe erzwungene Zurückdrehen auftretenden Spannungen sich nachteilig auswirken. Die Richtung der auftretenden Spannung ergibt sich nach der Lenzschen Regel. Durch die Freilaufdiode wird verhindert, dass der induzierte Strom an dem schaltenden Element also dem Motor eine hohe Spannung erzeugt und dann auch noch den Motor unter Umständen gefährdet. Während die zum Einsatz kommenden Freilaufdioden prinzipiell ein preiswertes Bauteil darstellen, ist der notwendige Lötprozess und das Vorhalten der Materialien zum Einlöten der Freilaufdiode recht teuer, so dass hier nach einem Ausweg gesucht wird. DE 197 47 211 A1 beschreibt einen Kleinstantrieb gemäß dem Oberbegriff des Anspruchs 1.

Der Erfindung liegt daher die Aufgabe zugrunde, Kleinstantriebe für Automobilschlösser zu schaffen, bei denen ein Zurückdrehen des Getriebes gezielt ohne Kurzschließen des Motors verhindert werden kann.

Die Aufgabe wird erfindungsgemäß durch den Gegenstand des Anspruchs 1 gelöst. Die Erfindung schlägt vor, dass die Sperre ein mechanisch wirkendes und dem Getriebe mit Schneckengetrieberad ein geringes Zurückdrehen ermöglichendes Sperrteil ist, das danach ein weiteres Drehen entgegen der Antriebsrichtung verhindernd ausgebildet ist, und dass das Sperrteil das geringe Zurückdrehen über einen vorgegebenen Bereich ermöglicht.

Eine solche mechanische Lösung kann ohne Lötarbeiten und sonstige aufwendigen Zusatzarbeiten montiert werden, so dass dadurch die Herstellungskosten des Kleinstantriebes nicht weiter belastet werden. Dadurch, dass diese mechanische Lösung ein geringes Zurückdrehen zulässt, kann sich das Getriebe vorteilhaft entspannen, so dass es beim nächsten Ansprechen des Motors automatisch in der richtigen Betriebsstellung sich befindet. Nach dem Entspannen des Getriebes ist dann die Sperre voll wirksam, so dass die nachteiligen Belastungen des Motors nicht mehr auftreten können und sich die Freilaufdiode vollkommen erübrigt.

Nach einer zweckmäßigen Ausführungsform der Erfindung ist vorgesehen, dass als Sperre ein dem Getriebe zugeordnetes Klemmrad vorgesehen ist, das das Zurückdrehen des dem Motor zugeordneten Antriebsrades durch Klemmen unterbindend ausgebildet ist. Auf diese Weise erfolgt also eine voll mechanische Abbremsung des Antriebsrades bzw. des Schneckenantriebsrades bzw. des gesamten Getriebes, wobei besonders vorteilhaft ist, dass eine derartige Ausbildung eines Klemmrades auch vom Materialaufwand her nur eine geringe Zusatzbelastung darstellt. Dieses Klemmrad kann so ausgebildet werden, dass wie erforderlich ein zunächst geringes Zurückdrehen möglich ist, was insbesondere dadurch ermöglicht wird, dass in das Klemmrad ein Freilauf integriert ist.

Das notwendige Abbremsen ist immer sicher erreichbar, wenn wie erfindungsgemäß vorgesehen dass Klemmrad über in einem Ringteil geführte Federarme verfügt, die in Antriebsrichtung das Mitdrehen eines dem Getriebe zugeordneten Antriebsrades mit geringer Reibung zulassend und ein Drehen in Rückdrehrichtung unterbindend ausgebildet sind. Ein derartiges Klemmrad, bestehend aus dem Ringteil und den Federarmen wird zweckmäßigerweise mit einer Vielzahl derartiger Federarme ausgerüstet, beispielsweise zwölf solcher Federarme, die entgegen der Antriebsrichtung über den eigentlichen Körper des Klemmrades hinausragen und mit ihrer Bremsfläche auf der Innenseite des Ringteils reiben, so dass sie dann bei Änderung der Drehrichtung sich automatisch verklemmen und das Klemmrad entsprechend abbremsen und am weiteren Drehen hindern.

Um einen Freilauf zu erreichen sieht die Erfindung vor, dass Klemmrad und Antriebsrad über einen dem Antriebsrad zugeordneten Nocken miteinander verbunden sind, der in einem teilkreisförmigen Ringspalt des Klemmrades geführt ist. Die Form bzw. die Länge des Ringspaltes gibt dann den Bereich vor, den das Antriebsrad in Rückdrehrichtung ausführen kann, bevor dann die Bremswirkung des Klemmrades voll eintritt.

Eine weitere zweckmäßige Ausführung der vorliegenden Erfindung ist die, bei der als Sperre ein dem Getriebe zugeordnetes Klemmrad vorgesehen ist, das als das Antriebsrad umfassende Schlingfeder ausgebildet und ein vorgegebenes Entspannen des Getriebes zulassend ausgeführt ist. Solche Schlingfedern sind grundsätzlich bekannt, wobei hier eine besondere Ausführung vorgesehen und notwendig ist, die das Entspannen des Getriebes vor Wirksamwerden der Klemmwirkung sicherstellt. Vorteilhaft ist insbesondere dabei, dass bei einer solchen Schlingfeder nicht zwei drehende Teile benötigt werden, sondern eben nur das Antriebsrad selbst, das durch die umfassende Schlingfeder dann bei Umstellung der Drehrichtung wirksam wird.

Dieses Entspannen des Getriebes wird insbesondere dadurch ermöglichst, dass die Schlingfeder ein über das Antriebsrad vorstehendes Hakenteilende aufweist, das in Antriebsrichtung eine geringe Reibung auf dem Antriebsrad bewirkend gegen einen Sperrklotz verfahren ist und beim Zurückdrehen mit dem Hakenmaul einen weiteren Sperrklotz umfassend und damit die Windungen der Schlingfeder auf den Außenrand des Antriebsrades pressend ausgebildet ist. Während das eine Ende der Schlingfeder fest mit dem Antriebsrad verbunden ist, steht das weitere Hakenteilende mit dem Hakenmaul über das Antriebsrad vor, so dass es mit den besagten Sperrklötzen korrespondieren kann. Während des zulässigen Betriebes des Antriebsrades in Antriebsrichtung stützt sich dieses vorstehende Hakenteilende an dem ersten Sperrklotz ab, ohne sich dabei festsetzen zu können. Vorteilhaft "öffnet" sich die Schlingfeder dabei geringfügig, so dass nur eine geringe Reibung in Antriebsrichtung auf den Außenrand des Antriebsrades aufgebracht wird. Wird nun der Öffnungsvorgang geändert und das Getriebe versucht auf den Motor in Rückdrehrichtung einzuwirken, wird das Hakenteilende mit dem Hakenmaul an den zweiten Sperrklotz heranbewegt und dort so fixiert, dass sich die Schlingfeder um das Antriebsrad schlingt, wobei die einzelnen Windungen der Schlingfeder fest auf den Außenrand des Antriebsrades aufgepresst werden.

Nach einem kurzen Entspannen des Getriebes wird dann der Betriebspunkt erreicht, wo sich das oder die Räder des Getriebes weiterbewegen bzw. Einfluss auf den Motor genommen wird. Über die Veränderung der beiden Klötze zueinander ist die Zeit für die Entspannung des Getriebes einstellbar.

Eine weitere Lösungsmöglichkeit, die jedoch nicht Teil der Erfindung ist, sondern lediglich zur Erläuterung alternativer Möglichkeiten dargestellt ist, besteht darin, dass das Getriebe ein Schneckengetrieberad mit einer Federlippe aufweist, die mit einer Sperrfläche im Schlossgehäuse korrespondierend ausgebildet ist. Diese Lösung weist den Vorteil auf, dass neben dem Schneckengetrieberad weitere Bauteile nicht benötigt werden, sondern dass das Schneckengetrieberad selber die entsprechende Abbremsung des Getriebes durch seine Formgebung sicherstellt. Die Federlippe ist dabei dem Schneckengetrieberad zugeordnet und die korrespondierende Sperrfläche dem Schlossgehäuse. Natürlich ist auch eine umgekehrte Anordnung denkbar.

Zweckmäßig ist bei dieser weiteren Lösungsmöglichkeit eine weitere Ausbildung, bei der die Federlippe in das Innenblatt des Schneckengetrieberades eingebracht und auf der Unterseite mit einem Sperrblock ausgerüstet ist. So kann die Federlippe auf einfache Art und Weise mit dem Schlossgehäuse bzw. der darin ausgebildeten korrespondierenden Sperrfläche zusammenwirken. Dieser Sperrblock ist dabei so geformt, dass er für die Bewegung in Antriebsrichtung eine Schräge aufweist, während in Rückdrehrichtung eine senkrechte Sperrfläche vorgegeben ist, die dann gegen die Sperrfläche im Schlossgehäuse anstößt, wenn das Schneckengetrieberad in Rückdrehrichtung bewegt wird. Das Schneckengetrieberad wird blockiert.

Um aufwendige Arbeiten am Schlossgehäuse zu vermeiden, ist es von Vorteil, wenn die Sperrfläche eine Stützspeiche für das Schneckengetrieberad ersetzend oder ergänzend und die übrigen Stützspeichen entsprechend überragend ausgebildet ist. Beispielsweise ist das dadurch zu erreichen, dass in einer der üblichen Stützspeichen eine Ausnehmung vorgesehen ist, in die ein Sperrteil mit einer Sperrfläche eingeschoben ist, die zum Abbremsen des Schneckengetrieberades bzw. zum Abblocken der Sperrblockes der Federlippe geeignet und angeordnet ist.

Die Erfindung zeichnet sich insbesondere dadurch aus, dass ein Kleinstantrieb zur Verfügung gestellt wird, der rein mechanisch auf das Getriebe eines solchen Kleinstantriebes einwirkt, um einmal die Entspannung des Getriebes herzustellen, dann aber ein weiteres Zurückdrehen sicher zu unterbinden. Dazu werden mehrere Lösungsmöglichkeiten vorgegeben, einmal in Form eines Antriebs und eines Klemmrades, die so miteinander zusammenwirken, dass sie in Antriebsrichtung einander praktisch unbeeinflusst lassen, während in Rückdrehrichtung eine wirksame Blockade des Getriebes erreicht wird. Eine weitere Möglichkeit arbeitet mit einer Schlingfeder, die das Antriebsrad so beeinflusst, dass es in Antriebsrichtung praktisch ohne Behinderung sich bewegen kann, während es in Rückdrehrichtung zunächst nur geringfügig abbremst, dann aber vollständig. Es erfordert also keine Zusatzbauteile, abgesehen von der dem Schlossgehäuse zuzuordnenden Sperrfläche bzw. dem Sperrteil, das mit dem Sperrblock der Federlippe zusammenwirkt und in Gegendrehrichtung für eine Abbremsung und dann Stillsetzung des Getriebes Sorge tragen kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: Ein geöffnetes Schlossgehäuse mit Schneckengetrieberad und Sperre für den Motor,
- Figur 2: eine Sperre in Form eines Klemmrades und eines Antriebsrades in Antriebsrichtung laufend,
- Figur 3: das gleiche Bauteil, sich in Rückdrehrichtung bewegend,
- Figur 4: ein Antriebsrad mit einer Schlingfeder in Antriebsrichtung drehend,
- Figur 5: das Bauteil nach Figur 4 in Rückdrehrichtung sich bewegend,
- Figur 6: ein Teilbereich eines Schlossgehäuses mit dem Einsatz für das Schneckengetrieberad,
- Figur 7: das Schneckengetrieberad in Draufsicht und
- Figur 8: das gleiche Schneckengetrieberad in Unteransicht.

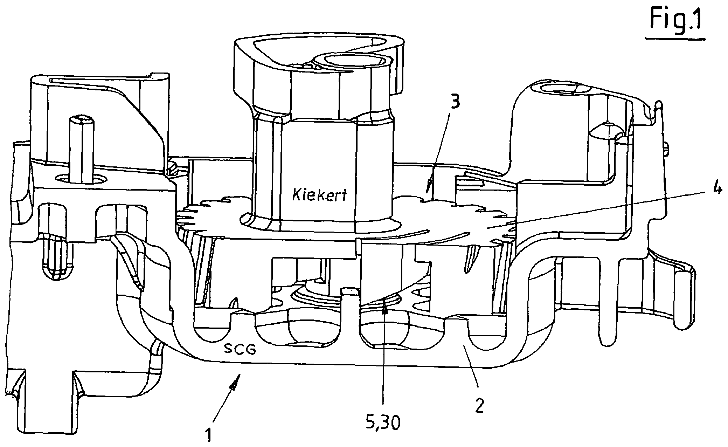

Figur 1 zeigt eine Teilansicht eines Kleinstantriebes 1, wobei im Schlossgehäuse 2 das Getriebe 3 mit dem Schneckengetrieberad 4 positioniert ist. Nur angedeutet ist hier die mechanische Sperre 5, welche bei der oben ausgeführten weiteren, nicht erfindungsgemäßen Lösungsmöglichkeit genutzt wird, und zwar in Form der weiter hinten noch zu erläuternden Federlippe 30.

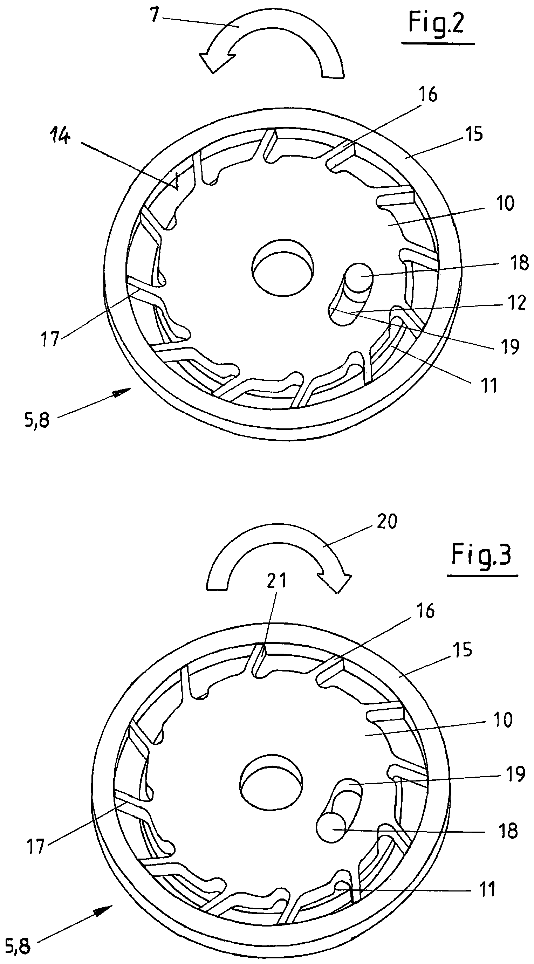

Figur 2 und Figur 3 zeigen eine erfindungsgemäße Ausführung einer Sperre 5 in Form eines mechanischen Sperrteiles 8, bestehend aus einem Klemmrad 10 und dem damit zusammenarbeitenden Antriebsrad 11. Antriebsrad 11 und Klemmrad 10 sind über einen Freilauf 12 verbunden, der weiter hinten noch erläutert wird.

Bei der Darstellung in Figur 2 bewegt sich das Klemmrad 10 und das Antriebsrad 11 in Antriebsrichtung 7, das heißt über den Kleinstantrieb 1 wird das hier nicht weiter dargestellte Automobilschloss geöffnet. Dabei nimmt das Antriebsrad 11 über seinen Nocken 18 das Klemmrad 10, das über vorstehende Federarme 16, 17 verfügt, mit. Die Federarme schleifen an der Innenseite 14 des dargestellten Ringteils 15. Hierzu sind sie mit anliegenden Bremsflächen 21 ausgerüstet, wobei diese Bremsflächen 21 sicherstellen, dass beim Drehen des Antriebsrades 11 in Rückdrehrichtung 20 (dargestellt in Figur 3) diese Bremsflächen 21 und die Federarme 16, 17 dafür Sorge tragen, dass das Klemmrad 10 abgebremst und dann stillgesetzt wird, sodass es über den Nocken 18, der im Ringspalt 19 geführt ist dafür sorgt, dass auch das Antriebsrad 11 nach Ablauf des Freilaufes 12 ebenfalls zum Stillstand kommt. Damit ist die Entspannung des Getriebes 3 gesichert und danach das schädliche Festsetzen des Schneckengetrieberades 4 und damit des Motors. Eine solche Sperre 5 für einen Kleinstantrieb arbeitet rein mechanisch, braucht kaum zusätzliche Bauteile und ist wie gewünscht einfach zu montieren.

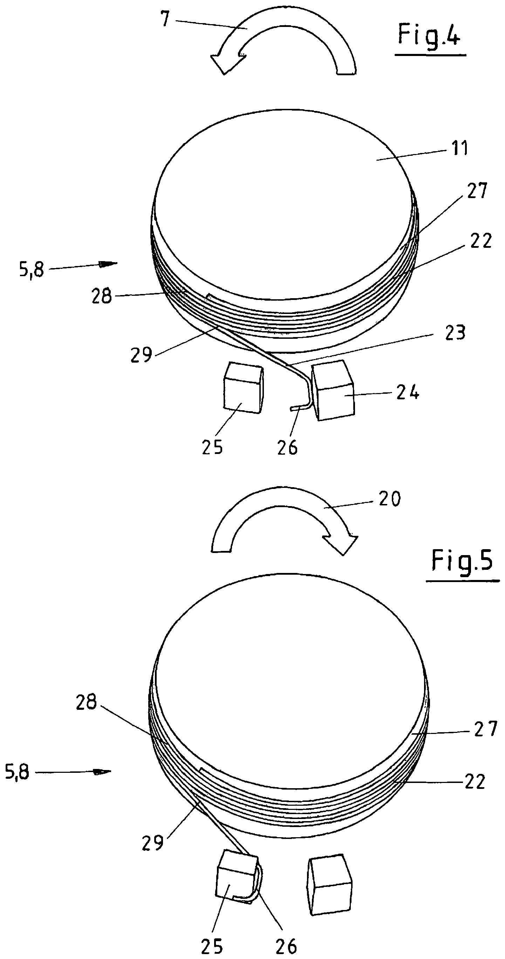

Bei der aus Figur 4 und 5 ersichtlichen Ausführung der Sperre 5 wird ebenfalls wieder mit einem mechanischen Sperrteil 8 gearbeitet.

Bei der Ausführung nach Figur 4 und 5 ist dem Antriebsrad 11 eine Schlingfeder 22 zugeordnet, die mit ihren Windungen 28, 29 dem Außenrand 27 des Antriebsrades 11 je nach Drehrichtung ein Drehen ermöglichend und ein Drehen behindernd bzw. dann verhindernd wirken kann. Dies wird dadurch erreicht, dass die Schlingfeder über ein freies vorstehendes Hakenteilende 23 verfügt, das bei der Antriebsrichtung 7 gegen den Sperrklotz 24 anstößt (Figur 4) und dadurch ein leichtes "Öffnen" der Schlingfeder 22 bewirkt. Das Hakenmaul 26 kann hierbei gegenüber dem Sperrklotz 24 nicht wirksam werden. Dies ist aber der Fall, wenn beim Drehen des Antriebsrades 11 in Rückdrehrichtung 20 das Hakenmaul 26 den Sperrklotz 25 umfasst. Hierdurch ist sichergestellt, dass nun die auftretenden Kräfte wirksam beherrscht werden und die Windungen 28, 29 so beeinflusst und beansprucht werden, dass sie sich dicht auf den Außenrand 27 des Antriebsrades 11 aufpressen und dafür für ein Abbremsen und stillsetzen des Antriebsrades Sorge tragen können.

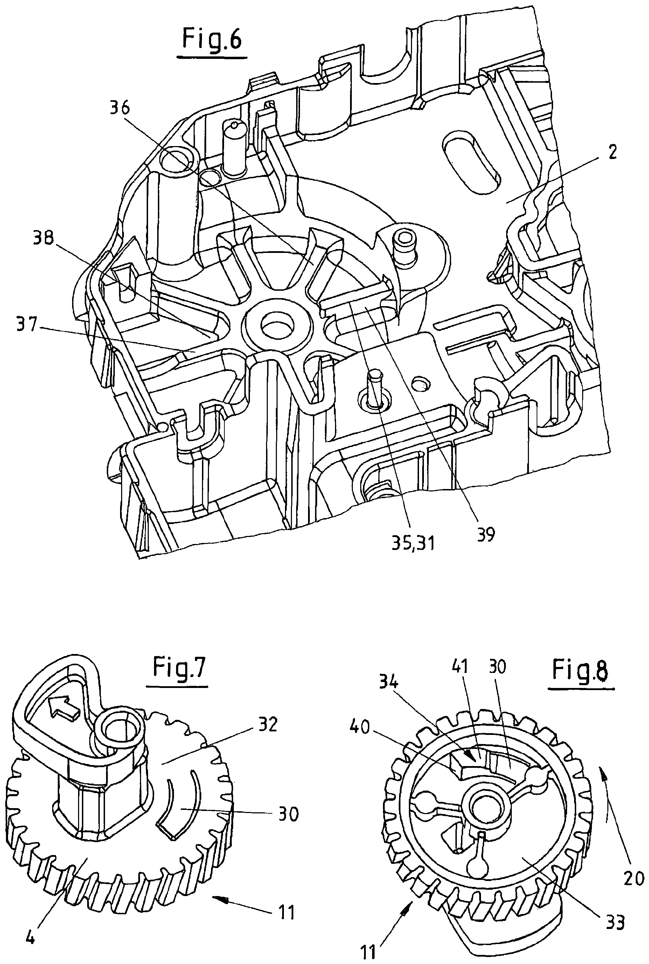

In Fig. 6-8 ist weitere, nicht erfindungsgemäße Lösung im Detail dargestellt. Die Teilansicht des Schlossgehäuses 2 zeigt den Platz, wo der Einsatz 38 für das Schneckengetrieberad 4 vorgesehen ist. Kenntlich gemacht ist dieser Einsatz 38 durch mehrere Stützspeichen 35, 36, 37, auf denen das in Figur 7 und 8 gezeigte Antriebsrad 11 beim Betrieb des Kleinstantriebes 1 abgestützt werden kann. Eine dieser Stützspeichen 35 zeigt erkennbar eine Erhöhung auf, die hier als Sperrfläche 31 bezeichnet ist. Über dieses überstehende Speichenteil 39 mit der Sperrfläche 31 kann bei Rückdrehrichtung 20 ein Abbremsen des Antriebsrades 11 sichergestellt werden. Das Antriebsrad 11 hat hierzu im Innenblatt 32 eine Federlippe 30 mit einem auf der Unterseite 33 (Figur 8) erkennbaren Sperrblock 34. Die Sperrkante 40 des Sperrblockes 34 stößt beim Betreiben des Antriebsrades 12 in Rückdrehrichtung 20 und auch bei der einfachen Erhöhung des Speichenteils 39 gegen die Sperrfläche 31, so dass es zu der gewünschten Abbremsung des Antriebsrades 11 kommt. Bei der umgekehrten Drehrichtung des Antriebsrades 11 rutscht das Speichenteil 39 über die geneigte Rutschfläche 41 des Sperrblockes 34, so dass es hier nicht zu Beeinträchtigungen kommen kann, wobei ja auch noch zu berücksichtigen ist, dass durch die Federlippe 30 eine federnde Wirkung sichergestellt ist.

## Patentansprüche

1. Kleinstantrieb (1) für das Betätigen von Automobilschlössern mit einem einem Schlossgehäuse (2) zugeordnetem Getriebe (3) mit Schneckengetrieberad (4) und einem Motor, der über eine ein Zurückdrehen des Getriebes (3) verhindernde Sperre (5) verfügt,
die Sperre (5) ein mechanisch wirkendes und dem Getriebe (3) mit Schneckengetrieberad (4) ein geringes Zurückdrehen ermöglichendes Sperrteil (8) ist, das danach ein weiteres Drehen entgegen der Antriebsrichtung (7) verhindernd ausgebildet ist,
**dadurch gekennzeichnet, dass**
das Sperrteil (8) das geringe Zurückdrehen über einen vorgegebenen Bereich ermöglicht.

2. Kleinstantrieb nach Anspruch 1, **dadurch gekennzeichnet, dass** als Sperre (5) ein dem Getriebe (3) zugeordnetes Klemmrad (10) vorgesehen ist, das das Zurückdrehen des dem Motor zugeordneten Antriebsrades (11) durch Klemmen unterbindend ausgebildet ist.

3. Kleinstantrieb nach Anspruch 2, **dadurch gekennzeichnet, dass** in das Klemmrad (10) ein Freilauf (12) integriert ist.

4. Kleinstantrieb nach Anspruch 2, **dadurch gekennzeichnet, dass** dem Klemmrad (10) über in einem Ringteil (15) geführte Federarme (16, 17) verfügt, die in Antriebsrichtung (7) das Mitdrehen eines dem Getriebe (3) zugeordneten Antriebsrades (11) mit geringer Reibung zulassend und ein Drehen in Rückdrehrichtung (20) unterbindend ausgebildet sind.

5. Kleinstantrieb nach Anspruch 4, **dadurch gekennzeichnet, dass** Klemmrad (10) und Antriebsrad (11) über einen dem Antriebsrad (11) zugeordneten Nocken (18) miteinander verbunden sind, der in einem teilkreisförmigen Ringspalt (19) des Klemmrades (10) geführt ist.

6. Kleinstantrieb nach Anspruch 1, **dadurch gekennzeichnet, dass** als Sperre (5) ein dem Getriebe (3) zugeordnetes Klemmrad (10) vorgesehen ist, das als das Antriebsrad (11) umfassende Schlingfeder (22) ausgebildet und ein vorgegebenes Entspannen des Getriebes (3) zulassend ausgeführt ist.

7. Kleinstantrieb nach Anspruch 6, **dadurch gekennzeichnet, dass** die Schlingfeder (22) ein über das Antriebsrad (11) vorstehendes Hakenteilende (23) aufweist, das in Antriebsrichtung (7) eine geringe Reibung auf dem Antriebsrad (11) bewirkend gegen einen Sperrklotz (24) verfahren ist und beim Zurückdrehen mit dem Hakenmaul (26) einen weiteren Sperrklotz (25) umfassend und damit die Windungen (28, 29) der Schlingfeder (22) auf den Außenrand (27) des Antriebsrades (11) pressend ausgebildet ist.

## Claims

1. Miniature drive (1) for operating automobile latches, comprising a mechanism (3) which is associated with a latch housing (2) and has a worm wheel (4), and a motor which has a lock (5) preventing the mechanism (3) from rotating backward, the lock (5) being a locking element (8) that acts mechanically and allows the mechanism (3) which has the worm wheel (4) to rotate backward slightly, which locking element is then designed to prevent further rotation counter to the drive direction (7), **characterized in that** the locking element (8) allows the slight backward rotation over a predetermined region.

2. Miniature drive according to claim 1, **characterized in that** a clamping wheel (10) associated with the mechanism (3) is provided as the lock (5), which clamping wheel is designed to stop, by means of clamping, the backward rotation of the drive wheel (11) associated with the motor.

3. Miniature drive according to claim 2, **characterized in that** an overrunning clutch (12) is integrated into the clamping wheel (10).

4. Miniature drive according to claim 2, **characterized in that** the clamping wheel (10) has spring arms (16, 17) which are guided in an annular element (15) and are designed to allow, in the drive direction (7), low-friction corotation of a drive wheel (11) associated with the mechanism (3) and to stop rotation in the reverse rotational direction (20).

5. Miniature drive according to claim 4, **characterized in that** the clamping wheel (10) and the drive wheel (11) are interconnected via a cam (18) which is associated with the drive wheel (11) and is guided in a partially circular annular gap (19) of the clamping wheel (10).

6. Miniature drive according to claim 1, **characterized in that** a clamping wheel (10) associated with the mechanism (3) is provided as the lock (5), which clamping wheel is designed as a wrap spring (22) encircling the drive wheel (11) and is designed to allow predefined release of the mechanism (3).

7. Miniature drive according to claim 6, **characterized in that** the wrap spring (22) has a hook-element end (23) which projects beyond the drive wheel (11) and is moved in the drive direction (7) against a locking block (24) so as to cause slight friction on the drive wheel (11), and is designed to encircle a further locking block (25) by means of the hook mouth (26) when rotating backward and thus to press the windings (28, 29) of the wrap spring (22) onto the outer edge (27) of the drive wheel (11).

## Revendications

1. Micro-entraînement (1) destiné à actionner des serrures d'automobile comportant un engrenage (3) affecté à un boîtier de serrure (2) comportant une roue d'engrenage à vis sans fin (4) et un moteur, lequel possède un verrou (5) empêchant une rotation arrière de l'engrenage (3), le verrou (5) étant une partie de verrouillage (8) qui agit mécaniquement et qui permet une faible rotation arrière de l'engrenage (3) comportant une roue d'engrenage à vis sans fin (4), laquelle partie de verrouillage est conçue pour ensuite empêcher une nouvelle rotation dans le sens opposé au sens d'entraînement (7),
**caractérisé**
**en ce que** la partie de verrouillage (8) permet la faible rotation arrière sur une plage prédéfinie.

2. Micro-entraînement selon la revendication 1, **caractérisé en ce qu'**une roue de serrage (10) affectée à l'engrenage (3) est prévue sous la forme d'un verrou (5), laquelle roue de serrage est conçue pour empêcher par serrage la rotation arrière de la roue motrice (11) affectée au moteur.

3. Micro-entraînement selon la revendication 2, **caractérisé en ce qu'**une roue libre (12) est intégrée dans la roue de serrage (10).

4. Micro-entraînement selon la revendication 2, **caractérisé en ce que** la roue de serrage (10) possède des bras de ressort (16, 17) guidés dans une partie annulaire (15), lesquels sont conçus pour permettre l'entraînement d'une roue motrice (11) affectée à l'engrenage (3) avec un faible frottement dans le sens d'entraînement (7), et pour empêcher une rotation dans le sens de rotation inverse (20).

5. Micro-entraînement selon la revendication 4, **caractérisé en ce que** la roue de serrage (10) et la roue motrice (11) sont reliées l'une à l'autre par l'intermédiaire d'une came (18) affectée à la roue motrice (11), laquelle came est guidée dans un espace annulaire partiellement circulaire (19) de la roue de serrage (10).

6. Micro-entraînement selon la revendication 1, **caractérisé en ce qu'**une roue de serrage (10) affectée à l'engrenage (3) est prévue sous la forme d'un verrou (5), laquelle roue de serrage est conçue sous la forme d'un ressort enroulé (22) entourant la roue motrice (11) et pour permettre un relâchement prédéfini de l'engrenage (3).

7. Micro-entraînement selon la revendication 6, **caractérisé en ce que** le ressort enroulé (22) présente une extrémité de partie de crochet (23) faisant saillie au-delà de la roue motrice (11), laquelle extrémité de partie de crochet est déplacée contre un cliquet de verrouillage (24) en provoquant un faible frottement sur la roue motrice (11) dans le sens d'entraînement (7), et est conçue, lors de la rotation arrière, pour entourer un autre cliquet de verrouillage (25) avec la mâchoire de crochet (26) et pour ainsi presser les enroulements (28, 29) du ressort enroulé (22) contre le bord extérieur (27) de la roue motrice (11).
